# FASCICULE DE BREVET EUROPEEN

(11) **EP 2 485 944 B1**
(45) Date de publication et mention de la délivrance du brevet: **04.12.2013**
(21) Numéro de dépôt: 10767931.8
(22) Date de dépôt: 05.10.2010
(51) Int. Cl.: B64D 31/04

(54) **DISPOSITIF DE COMMANDE DES GAZ D'UN AERONEF, INCORPORANT UNE LIAISON PAR GALET CRANTEUR**
FLUGZEUGDROSSELSTEUERUNG MIT EINRASTENDER ROLLENKUPPLUNG
AIRCRAFT THROTTLE CONTROL DEVICE INCLUDING AN ENGAGING ROLLER COUPLING

(30) Priorité: 06.10.2009 FR 0904759
(43) Date de publication de la demande: 15.08.2012
(73) Titulaire: SAGEM Défense Sécurité, 75015 Paris (FR)
(72) Inventeur: ELABELLAOUI, Hafid, F-75015 Paris (FR); BESOLD, Jean-Eric, F-75015 Paris (FR); PAUTARD, Sébastien, F-75015 Paris (FR); ENGLER, David, F-75015 Paris (FR); MERLET, Etienne, F-75015 Paris (FR)
(74) Mandataire: Beaudouin-Lafon, Emmanuel
(86) Numéro de dépôt international: PCT/EP2010/006056
(87) Numéro de publication internationale: WO 2011/042146

(56) Documents cités:
- GB-A- 1 450 076
- US-A- 3 444 765
- US-A- 3 572 155

## Description

La présente invention concerne un dispositif de commande des gaz d'un moteur d'aéronef. Un tel dispositif est connu de US-3,572,155, qui représente l'art antérieur le plus proche.

Les turboréacteurs modernes sont équipés d'un dispositif inverseur de poussée permettant de diriger une partie du flux sortant du turboréacteur vers l'avant du turboréacteur (selon une direction formant généralement un angle de quarante-cinq degrés environ avec la direction d'avancement de l'aéronef) afin de compléter l'action des freins sur le ralentissement de l'aéronef à l'atterrissage. Différents dispositifs inverseurs existent et notamment les dispositifs à portes et les dispositifs à grilles.

Il existe également des moteurs à hélice incorporant un dispositif inverseur de poussée agencée pour inverser le pas de l'hélice.

Le poste de pilotage des aéronefs pourvus d'un tel moteur est équipé d'un dispositif de commande des gaz permettant au pilote de commander le débit de carburant admis dans la chambre de combustion du moteur et le dispositif inverseur de poussée. Le dispositif de commande comprend à cette fin un bâti sur lequel sont montées pour pivoter une roue codeuse ainsi qu'une manette principale, ou manette des gaz, et une manette secondaire, ou manette d'inversion de poussée, qui sont agencées pour entraîner en rotation la roue codeuse. La roue codeuse est associée à des capteurs reliés à une unité de commande du moteur. Les manettes sont chacune mobiles entre une position de repos et une position d'actionnement maximal. La manette d'inversion de poussée est articulée sur la manette de gaz. L'ensemble des deux manettes est relié à la roue codeuse via un système complexe de liaison comprenant une roue intermédiaire sur laquelle la manette de gaz est montée coaxialement et qui est reliée à la roue codeuse. L'entraînement de la roue intermédiaire par les manettes est contrôlé par un dispositif interdisant le déplacement d'une manette si l'autre manette est hors de sa position de repos. Ce dispositif repose sur des cames, des pièces en arc-boutement ou ayant des courses présentant des points de rebroussement.

Dans les systèmes les plus élaborés, la course de chaque manette comprend une zone de transition au voisinage immédiat de la position de repos. Lorsqu'une manette se trouve dans la zone de transition et que l'autre manette est déplacée hors de sa position de repos, la première manette est ramenée dans sa position de repos.

Le système de liaison présente un encombrement et un poids importants, du fait notamment de la roue intermédiaire. En outre, les efforts transmis sont élevés et obligent à un dimensionnement conséquent des pièces du système de liaison contribuant au poids et au volume du système de liaison, d'autant que tout élément entrant dans la chaine de liaison entre l'une quelconque des manettes et la roue codeuse doit être dupliqué pour obtenir une redondance indispensable à la sécurité du dispositif.

Un but de l'invention est de fournir un moyen permettant d'obtenir une amélioration sur au moins une partie des inconvénients ci-dessus.

A cet effet, on prévoit, selon l'invention, un dispositif de commande d'un moteur d'aéronef, comportant un bâti sur lequel sont montées pour pivoter une roue codeuse ainsi qu'une manette principale et une manette secondaire d'entraînement en rotation de la roue codeuse, les manettes étant chacune mobiles entre une position de repos et une position d'actionnement maximal, caractérisé en ce qu'une bielle relie de façon permanente la manette secondaire à la roue codeuse et en ce que la manette principale est pourvue d'un organe de liaison agencé pour coopérer avec un relief de la roue codeuse et un relief du bâti de telle manière que l'organe de liaison accroche la roue codeuse lorsque la manette principale est manoeuvrée depuis la position de repos de la manette secondaire et accroche le bâti en libérant la rotation de la roue codeuse lorsque la manette secondaire est manoeuvrée depuis la position de repos de la manette principale, en interdisant un mouvement d'une manette lorsque l'autre est hors de sa position de repos.

Ainsi, la liaison directe et permanente de la manette secondaire à la roue codeuse permet d'avoir une structure simple. En outre, la manette principale est rendue solidaire soit de la roue codeuse soit du bâti. Lorsque la manette principale est rendue solidaire de la roue codeuse, la manette secondaire ne peut déplacer la roue codeuse indépendamment de la manette principale. Lorsque la manette principale est rendue solidaire du bâti, la manette principale est bloquée en rotation de sorte que seule la manette secondaire peut déplacer la roue codeuse indépendamment de la manette principale.

Selon un premier mode de réalisation, l'organe de liaison comprend un bras ayant une extrémité articulée à la manette principale et une extrémité libre agencée pour coopérer avec les reliefs et, avantageusement, l'extrémité libre est renflée et est reçue entre deux parois qui s'étendent en arc de cercle coaxialement à la roue codeuse et qui sont solidaires pour l'une de la roue codeuse et pour l'autre du bâti, les parois étant écartées l'une de l'autre et comportant chacune un renfoncement pour recevoir une partie de l'extrémité libre de telle manière qu'une rotation de la roue codeuse par rapport au bâti ne soit possible que lorsque l'extrémité libre est reçue dans l'un ou l'autre des renfoncements, les renfoncements s'étendant en regard l'un de l'autre lorsque la roue codeuse est dans une position commune aux positions de repos des manettes et l'extrémité libre étant préférentiellement rappelée élastiquement contre la paroi solidaire de la roue codeuse.

Ce mode de réalisation possède une structure extrêmement simple. La transmission des efforts des manettes vers la roue codeuse est assurée de manière directe, ce qui permet de limiter les frottements, les effets de levier ou d'arc-boutement non désirés. Ces gains, associés à la liaison directe présentant donc très peu de pièces, contribuent à la fiabilité intrinsèque du dispositif (hors redondance). Le nombre réduits de liaisons mécaniques contribue également à la précision de recopie de position des manettes.

Selon un deuxième mode de réalisation, l'extrémité libre du bras est pourvue d'au moins un galet pivotant autour d'un axe parallèle à l'axe de rotation de la roue codeuse.

Ce mode de réalisation présente des avantages similaires au premier mode de réalisation avec une structure légèrement plus complexe, mais limitant les frottements et usures associées lors des manoeuvres des manettes.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en coupe d'un dispositif de commande conforme à un premier mode de réalisation de l'invention,
- la figure 2 est une vue agrandie de la zone II de la figure 1,
- les figures 3 et 4 sont des vues schématiques, avec une zone agrandie, montrant les positions d'actionnement maximal des manettes dans le dispositif conforme au premier mode de réalisation,
- les figures 5, 6 et 7 sont des vues analogues à la figure 1, mais simplifiées, d'un dispositif de commande selon un deuxième mode de réalisation.

Le dispositif de commande des gaz ici décrit est agencé pour commander le débit de carburant et un dispositif inverseur de poussée d'un moteur d'aéronef.

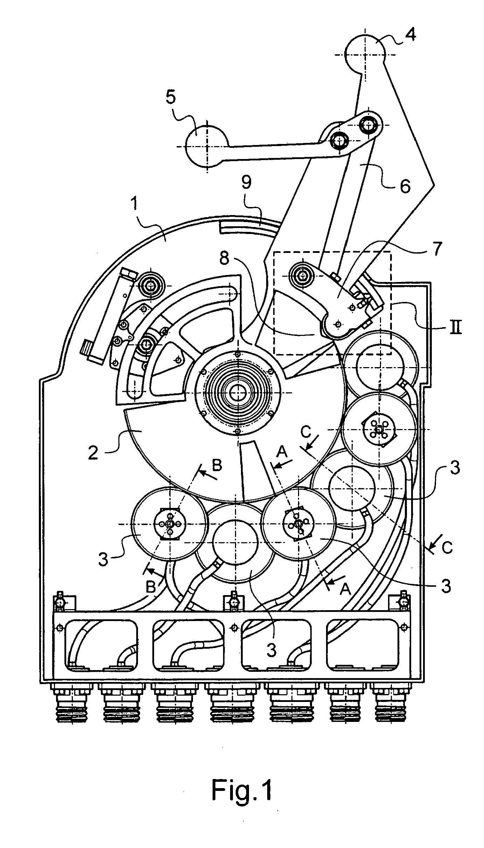

En référence aux figures 1 à 4, le dispositif de commande comprend un bâti 1 sur lequel est montée pour pivoter une roue codeuse 2. Des capteurs 3 de position angulaire de la roue codeuse 2 sont montés sur le bâti 1 en regard du pourtour de la roue codeuse 2.

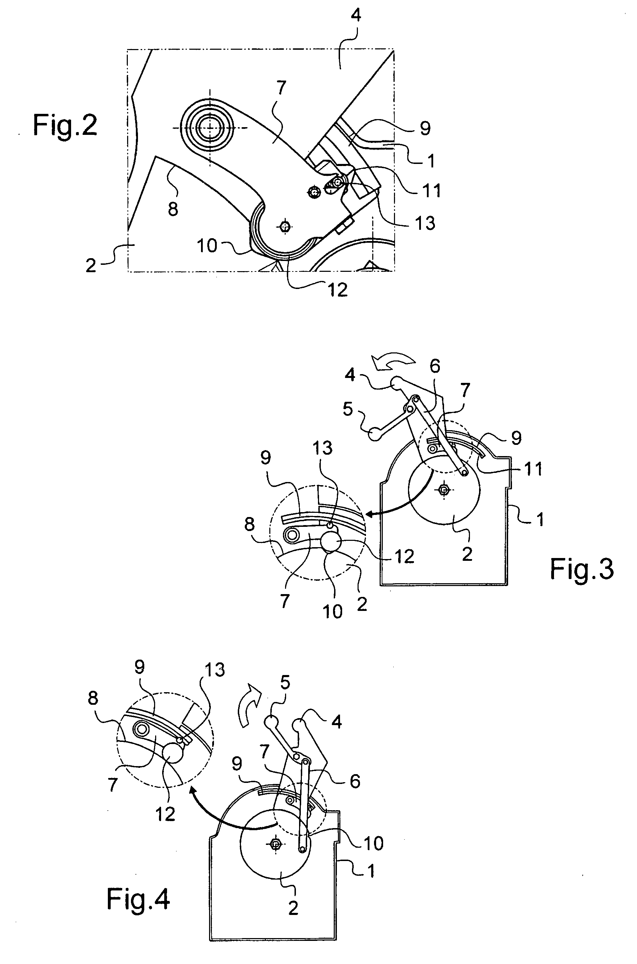

Sur le bâti 1 est montée une manette principale 4 pour pivoter coaxialement à la roue codeuse 2. La manette principale 4 comprend deux flasques parallèles entre lesquels est montée une manette secondaire 5 pour pivoter autour d'un axe parallèle à l'axe de rotation de la roue codeuse 2 et de la manette principale 4. Les manettes 4, 5 pivotent entre une position de repos (représentée sur la figure 1 pour les deux manettes) et une position d'actionnement maximal (représentée sur la figure 3 pour la manette principale 4 et sur la figure 4 pour la manette secondaire 5). La manette principale 4 est une manette de commande des gaz permettant de commander le débit de carburant et sa position d'actionnement maximal se trouve sur la gauche sur la figure 1 : le pilote pousse la manette principale 4 pour augmenter la puissance délivrée par le moteur (figure 3). La manette secondaire 5 est une manette de commande du dispositif inverseur de poussée et sa position d'actionnement maximal se trouve à droite sur la figure 1 : le pilote tire sur la manette secondaire 5 pour obtenir d'une part le déploiement du dispositif d'inversion de poussée, puis d'autre part pour augmenter la puissance délivrée par le moteur (figure 4).

La manette secondaire 5 est reliée à la roue codeuse 2 de manière directe et permanente par une bielle 6 s'étendant entre les flasques de la manette principale 4.

La manette principale 4 est pourvue d'un organe de liaison qui comprend un bras 7 ayant une extrémité articulée à la manette principale 4 et une extrémité libre agencée pour coopérer avec un relief solidaire de la roue codeuse 2, et un autre relief solidaire du bâti 1.

L'extrémité libre du bras 7 est reçue entre deux parois qui s'étendent en regard l'une de l'autre et en arc de cercle coaxialement à la roue codeuse 2. Une des parois, portant la référence 8, est solidaire de la roue codeuse 2 et l'autre, portant la référence 9, est solidaire du bâti 1.

Les parois 8, 9 sont écartées l'une de l'autre et comportent chacune un renfoncement 10, 11 pour recevoir une partie de l'extrémité libre du bras 7. Les renfoncements s'étendent en regard l'un de l'autre lorsque la roue codeuse 2 est dans une position commune aux positions de repos des manettes 4, 5.

L'extrémité libre du bras 7 est pourvue ici de deux galets 12, 13 pivotants autour d'un axe parallèle à l'axe de rotation de la roue codeuse 2 et alignés selon une direction sensiblement radiale de la roue codeuse 2 pour rouler respectivement sur la paroi 8 et sur la paroi 9. L'écartement des galets 12, 13 est ici fixe.

Les galets 12, 13 peuvent être reçus respectivement dans le renfoncement 10 et dans le renfoncement 11 de telle manière qu'une rotation de la roue codeuse 2 par rapport au bâti 1 ne soit possible que lorsque l'un des galets 12, 13 est reçu dans le renfoncement 10, 11 correspondant, c'est-à-dire que la somme des rayons des galets et de leur entraxe est sensiblement égale à la somme de la distance entre les parois et de la profondeur d'un des renfoncements.

Un ressort s'étend entre le bras 7 et la manette principale 4 entre les flasques de celle-ci pour rappeler élastiquement le galet 12 contre la paroi 8 solidaire de la roue codeuse 2.

On comprend que, lorsque les renfoncements 10, 11 se trouvent en regard l'un de l'autre (position de la roue codeuse 2 commune aux positions de repos des manettes 4, 5, voir la figure 1), la manette principale 4 peut être déplacée vers sa position d'actionnement maximal. Ce faisant (voir la figure 3) le galet 12 est reçu dans le renfoncement 10 et entraîne la roue codeuse 2, la paroi 9 maintenant le galet 12 dans le renfoncement 10. La manette secondaire 5 est bloquée.

Lorsque les renfoncements 10, 11 se trouvent en regard l'un de l'autre (position de la roue codeuse 2 commune aux positions de repos des manettes 4, 5), la manette secondaire 5 peut être déplacée vers sa position d'actionnement maximal en entraînant la roue codeuse via la bielle 6. La roue codeuse 2 repousse alors le galet 12 hors du renfoncement 10 (voir la figure 4) et provoque l'engagement du galet 13 dans le renfoncement 11 dans lequel il est maintenu par la paroi 8. La manette principale 4 est ainsi liée au bâti 1 et bloquée.

L'organe de liaison est ainsi agencé pour coopérer avec un relief de la roue codeuse 2 et un relief du bâti 1 de telle manière que l'organe de liaison accroche la roue codeuse 2 lorsque la manette principale 4 est manoeuvrée depuis la position de repos de la manette secondaire 5 et accroche le bâti 1 en libérant la rotation de la roue codeuse 2 lorsque la manette secondaire 5 est manoeuvrée depuis la position de repos de la manette principale 4, en interdisant un mouvement d'une manette lorsque l'autre est hors de sa position de repos.

On notera que les renfoncements 10, 11 sont chacun équipé d'une rampe qui permet de définir une zone de transition : lorsque le galet 12 ou le galet 13 se trouve sur la rampe du renfoncement 10, 11 et que la manette 5, 4 respectivement est déplacée, la rampe va ramener la manette 4, 5 respectivement en position de repos tandis que le mouvement de la manette 5, 4 se poursuit.

L'entraxe et le diamètre des galets 12, 13, et l'inclinaison des rampes vont permettre de déterminer l'étendue de la zone de transition pour chacune des deux manettes indépendamment. Ainsi, par exemple :
- si la manette principale 4 est décalée de moins de deux degrés par rapport à sa position de repos, tout déplacement de la manette secondaire 5 hors de sa position de repos entraîne le retour de la manette principale 4 dans sa position de repos,
- si la manette secondaire 5 est décalée de moins de quinze degrés par rapport à sa position de repos, tout déplacement de la manette principale 4 hors de sa position de repos entraîne le retour de la manette secondaire 5 dans sa position de repos.

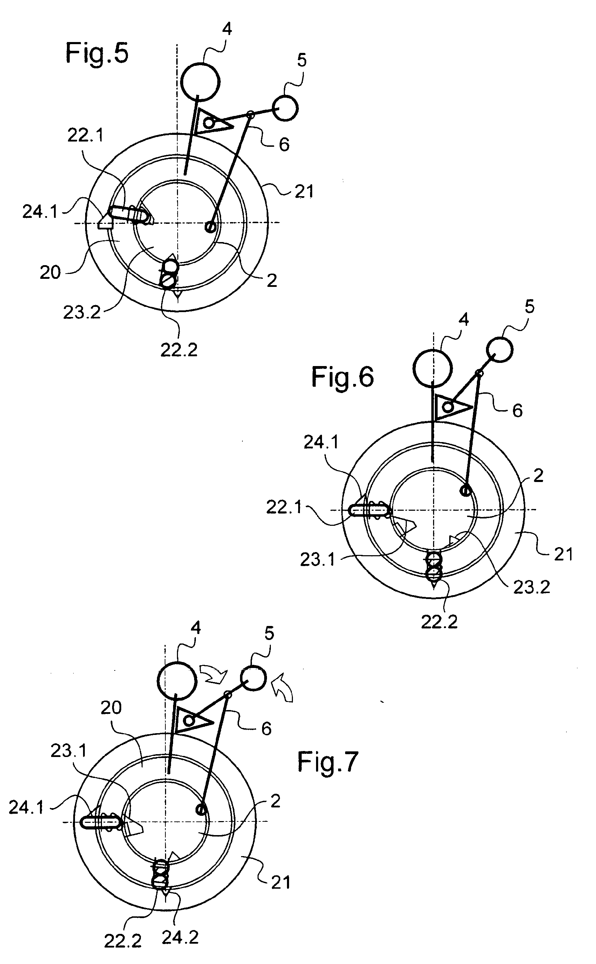

En référence aux figures 5 à 7, le dispositif conforme au deuxième mode de réalisation de l'invention comprend comme précédemment : un bâti 1, une roue codeuse 2, des capteurs 3, une manette principale 4 et une manette secondaire 5 et une bielle 6 reliant de manière directe et permanente la manette secondaire 5 à la roue codeuse 2.

L'organe de liaison de la manette principale 4 à la roue codeuse 2 comprend une couronne 20 entourant la roue codeuse 2 en étant reçue entre une surface périphérique de la roue codeuse 2 et une paroi 21 du bâti 1 entourant la couronne 20. La couronne 20 reçoit à coulissement deux goupilles 22.1, 22.2 ayant des extrémités agencées pour coopérer avec des renfoncements 23.1, 23.2 ménagés dans la roue codeuse 2 et des renfoncements 24.1, 24.2 ménagés dans la paroi 21 du bâti 1 pour solidariser la couronne 20 en rotation sélectivement avec la roue codeuse 2 et la paroi 21 du bâti 1. La goupille 22.1 est un pion rappelé élastiquement en saillie externe de la couronne 20. La goupille 22.2 est ici composée de deux billes maintenues écartées l'une de l'autre et en saillie interne et externe de la couronne 20 par un organe élastique.

Les renfoncements 23.1, 23.2 et les renfoncements 24.1, 24.2 sont en regard lorsque la roue codeuse 2 est dans sa position commune aux positions de repos des manettes 4, 5. Dans cette position, la goupille 22.1 est en saillie dans le renfoncement 24.1 et la goupille 22.2 a ses extrémités en saillie dans les renfoncements 23.2 et 24.2 respectivement.

Comme dans le premier mode de réalisation, en partant de la position de la roue codeuse commune aux positions de repos des manettes 4, 5 :
- lorsque la manette 4 est déplacée vers sa position d'actionnement maximal (située à droite sur les figures 5 à 7), la goupille 22.2 est chassée du logement 24.2 et est maintenue bloquée en saillie dans le logement 23.2 bloquant la manette secondaire 5 par rapport à la couronne 20, la goupille 22.1 est chassée du logement 24.1 et est maintenue bloquée en saillie dans le logement 23.1 pour lier en rotation la couronne 20 à la roue codeuse 2 (figure 5),
- lorsque la manette 5 est déplacée vers sa position d'actionnement maximal, la goupille 22.2 est chassée du logement 23.2 et est maintenue bloquée en saillie dans le logement 24.2 bloquant la manette 4, la goupille 22.1 est chassée du logement 23.1 et est maintenue bloquée en saillie dans le logement 24.1 (figure 6).

Comme dans le premier mode de réalisation les renfoncements 23.1 et 24.1 comportent des rampes permettant de définir des zones de transition.

La séparation, facultative, des fonctions de verrouillage alterné des manettes de gaz 4 et 5 par la goupille 22.2 (coopérant avec les reliefs 23.2 et 24.2), et de gestion du rappel des manettes de gaz de leur zone de transition respective par la goupille 22.1 (coopérant avec les reliefs 23.1 et 24.1), permet une plus grande souplesse dans les lois de cinématiques.

Bien entendu, l'invention n'est pas limitée aux modes de réalisations décrits mais englobe toute variante entrant dans le champ de l'invention telle que définie par les revendications.

En particulier, l'extrémité libre du bras peut être d'un seul galet pivotant autour d'un axe parallèle à l'axe de rotation de la roue codeuse, de deux galets pivotant autour d'un axe parallèle à l'axe de rotation de la roue codeuse et alignés selon une direction sensiblement radiale de la roue codeuse, les galets étant fixes ou mobiles l'un par rapport à l'autre parallèlement à la direction sensiblement radiale et étant rappelés élastiquement dans une position écartée l'un de l'autre.

L'extrémité libre du bras peut aussi être pourvue d'un pion coulissant sensiblement radialement, de longueur fixe ou apte à un allongement sensiblement radial, et rappelé élastiquement dans une position écartée.

Le bras 7 peut être supprimé, le ou les galets ou pions précédemment cités pouvant être montés directement sur la structure de la manette 4 à condition de prévoir dans celle-ci un guidage leur assurant une mobilité sensiblement radiale.

Pour permettre de réduire les jeux mécaniques et faciliter la fabrication des pièces, il est possible de prévoir un dispositif de réglage de l'entraxe des galets.

Le dispositif peut ou non comprendre des moyens pour définir des lois d'effort et/ou de cinématique contrôlées de rappel automatique d'au moins une des manettes dans sa position de repos, lesdits moyens pouvant comprendre des profils des reliefs.

L'ensemble roue codeuse et manettes peut ou non être associé à des moyens de friction agissant au voisinage de l'axe ou du pourtour extérieur de la roue codeuse.

## Revendications

1. Dispositif de commande d'un moteur d'aéronef, comportant un bâti (1) sur lequel sont montées pour pivoter une roue codeuse (2) ainsi qu'une manette principale (4) et une manette secondaire (5) d'entraînement en rotation de la roue codeuse, les manettes étant chacune mobiles entre une position de repos et une position d'actionnement maximal, et dont une bielle (6) relie de façon permanente la manette secondaire à la roue codeuse, **caractérisé en ce que** la manette principale est pourvue d'un organe de liaison (7) agencé pour coopérer avec un relief (10) solidaire de la roue codeuse et un relief (11) solidaire du bâti de telle manière que l'organe de liaison accroche la roue codeuse lorsque la manette principale est manoeuvrée depuis la position de repos de la manette secondaire et accroche le bâti en libérant la rotation de la roue codeuse lorsque la manette secondaire est manoeuvrée depuis la position de repos de la manette principale, en interdisant un mouvement d'une manette lorsque l'autre est hors de sa position de repos.

2. Dispositif selon la revendication 1, dans lequel l'organe de liaison (7) comprend un bras ayant une extrémité articulée à la manette principale (4) et une extrémité libre agencée pour coopérer avec les reliefs (10, 11).

3. Dispositif selon la revendication 1 ou la revendication 2, dans lequel l'organe de liaison (7) est reçu entre deux parois (8, 9) qui s'étendent en arc de cercle coaxialement à la roue codeuse (2) et qui sont solidaires pour l'une de la roue codeuse et pour l'autre du bâti (1), les parois étant écartées l'une de l'autre et comportant chacune un renfoncement (10, 11) pour recevoir une partie de l'organe de liaison de telle manière qu'une rotation de la roue codeuse par rapport au bâti ne soit possible que lorsque l'organe de liaison est reçu dans l'un ou l'autre des renfoncements, les renfoncements s'étendant en regard l'un de l'autre lorsque la roue codeuse est dans une position commune aux positions de repos des manettes.

4. Dispositif selon la revendication 3, dans lequel l'organe de liaison (7) est rappelé élastiquement contre la paroi (8) solidaire de la roue codeuse (2).

5. Dispositif selon la revendication 3, dans lequel l'organe de liaison (7) est pourvu d'au moins un galet (12, 13) pivotant autour d'un axe parallèle à l'axe de rotation de la roue codeuse (2).

6. Dispositif selon la revendication 5, dans lequel l'organe de liaison (7) est pourvu de deux galets (12, 13) pivotant autour d'un axe parallèle à l'axe de rotation de la roue codeuse (2) et alignés selon une direction sensiblement radiale de la roue codeuse.

7. Dispositif selon la revendication 6, dans lequel les galets (12, 13) sont mobiles l'un par rapport à l'autre parallèlement à la direction sensiblement radiale et sont rappelés élastiquement dans une position écartée l'un de l'autre.

8. Dispositif selon la revendication 1, dans lequel l'organe de liaison (7) comprend au moins un élément mobile en translation selon une direction sensiblement radiale de la roue codeuse (2).

9. Dispositif selon la revendication 1, dans lequel la manette principale (4) est coaxiale à la roue codeuse (2).

10. Dispositif selon la revendication 1, dans lequel l'organe de liaison comprend au moins un segment de couronne (20) entourant la roue codeuse (2) en étant reçu entre une surface périphérique de la roue codeuse et une paroi (21) du bâti entourant le segment de couronne, le segment de couronne recevant à coulissement au moins une goupille (22.1, 22.2) ayant des extrémités agencées pour coopérer avec des renfoncements (23.1, 24.1) ménagés dans la roue codeuse et la paroi du bâti pour solidariser le segment de couronne en rotation sélectivement avec la roue codeuse et la paroi du bâti.

11. Dispositif selon la revendication 10, dans lequel les renfoncements (23.1, 24.1) comportent des rampes définissant des zones de transition au voisinage de la position de repos telles que, lorsqu'une manette (4, 5) se trouve dans la zone de transition, un déplacement de l'autre manette vers sa position d'actionnement maximal provoque le retour de la première manette dans sa position de repos.

12. Dispositif selon la revendication 10, comportant deux goupilles (22.1, 22.2) assurant pour l'une une fonction de verrouillage et pour l'autre une fonction de rappel en position de repos dans la zone de transition en avec des renfoncements correspondants.

13. Dispositif selon la revendication 1, comprenant des moyens pour définir des lois d'effort et/ou de cinématique contrôlées de rappel automatique d'au moins une des manettes (4, 5) dans sa position de repos.

14. Dispositif selon la revendication 13, dans lequel lesdits moyens pour définir comprennent des profils des reliefs.

15. Dispositif selon la revendication 1, dans lequel la manette principale (4) comprend deux flasques entre lesquels sont montées la manette secondaire (5) et la bielle (6).

16. Dispositif selon la revendication 1, l'ensemble roue codeuse (2) et manettes (4, 5) étant associé à des moyens de friction agissant au voisinage de l'axe ou du pourtour extérieur de la roue codeuse.

17. Dispositif selon la revendication 1, dans lequel l'organe de liaison (7) est rappelé élastiquement contre une paroi solidaire de la roue codeuse (2) et pourvue du relief (10).

18. Dispositif selon la revendication 1, dans lequel l'organe de liaison est pourvu d'au moins un galet (12, 13) pivotant autour d'un axe parallèle à l'axe de rotation de la roue codeuse.

## Patentansprüche

1. Vorrichtung zur Steuerung eines Motors eines Luftfahrzeugs, umfassend ein Gestell (1), an dem ein Kodierrad (2) sowie ein Haupthebel (4) und ein Hilfshebel (5) zum Drehen des Kodierrades drehbar gelagert sind, wobei die Hebel jeweils zwischen einer Ruheposition und einer maximalen Aktionsposition beweglich sind und von denen eine Verbindungsstange (6) den Hilfshebel dauerhaft mit dem Kodierrad verbindet, **dadurch gekennzeichnet, dass** der Haupthebel mit einem Verbindungsorgan (7) versehen ist, das so ausgebildet ist, dass es mit einem Profil (10), das fest mit dem Kodierrad verbunden ist, und mit einem Profil (11), das fest mit dem Gestell verbunden ist, so zusammenwirkt, dass das Verbindungsorgan in das Kodierrad eingreift, wenn der Haupthebel ausgehend von der Ruheposition des Hilfshebels verstellt wird und in das Gestell eingreift unter Freigabe der Rotation des Kodierrads, wenn der Hilfshebel ausgehend von der Ruheposition des Haupthebels verstellt wird, indem eine Bewegung des einen Hebels verhindert wird, wenn sich der andere außerhalb seiner Ruheposition befindet.

2. Vorrichtung nach Anspruch 1, wobei das Verbindungsorgan (7) einen Arm mit einem Ende, das gelenkig mit dem Haupthebel (4) verbunden ist, und mit einem freien Ende umfasst, das so ausgebildet ist, dass es mit den Profilen (10, 11) zusammenwirkt.

3. Vorrichtung nach Anspruch 1 oder 2, wobei das Verbindungsorgan (7) zwischen zwei Wänden (8, 9) aufgenommen ist, die sich kreisbogenförmig koaxial zum Kodierrad (2) erstrecken und von denen die eine fest mit dem Kodierrad und die andere fest mit dem Gestell (1) verbunden ist, wobei die Wände voneinander beabstandet sind und jeweils eine Vertiefung (10, 11) zur Aufnahme eines Teils des Verbindungsorgans umfassen, so dass eine Rotation des Kodierrads relativ zum Gestell nur möglich ist, wenn das Verbindungsorgan in der einen oder der anderen Vertiefung aufgenommen ist, wobei die Vertiefungen einander gegenüberliegen, wenn sich das Kodierrad in einer zu den Ruhepositionen der Hebel gemeinsamen Position befindet.

4. Vorrichtung nach Anspruch 3, wobei das Verbindungsorgan (7) gegen die fest mit dem Kodierrad (2) verbundene Wand (8) elastisch vorgespannt ist.

5. Vorrichtung nach Anspruch 3, wobei das Verbindungsorgan (7) mit mindestens einer Rolle (12, 13) versehen ist, die sich um eine Achse dreht, die parallel zur Rotationsachse des Kodierrads (2) ist.

6. Vorrichtung nach Anspruch 5, wobei das Verbindungsorgan (7) mit zwei Rollen (12, 13) versehen ist, die sich um eine Achse drehen, die parallel zur Rotationsachse des Kodierrads (2) ist, und die in einer zum Kodierrad im Wesentlichen radialen Richtung fluchtend angeordnet sind.

7. Vorrichtung nach Anspruch 6, wobei die Rollen (12, 13) parallel zueinander in einer im Wesentlichen radialen Richtung beweglich und elastisch in eine voneinander beabstandete Position vorgespannt sind.

8. Vorrichtung nach Anspruch 1, wobei das Verbindungsorgan (7) mindestens ein Element umfasst, das in einer zum Kodierrad (2) im Wesentlichen radialen Richtung translatorisch beweglich ist.

9. Vorrichtung nach Anspruch 1, wobei der Haupthebel (4) koaxial zum Kodierrad (2) ist.

10. Vorrichtung nach Anspruch 1, wobei das Verbindungsorgan mindestens ein Ringsegment (20) umfasst, das das Kodierrad (2) umschließt, indem es zwischen einer Umfangsfläche des Kodierrads und einer Wand (21) des Gestells, das das Ringsegment umschließt, aufgenommen ist, wobei das Ringsegment mindestens einen Arretierstift (22.1, 22.2) gleitend aufnimmt, der Enden besitzt, die so ausgebildet sind, dass sie mit Vertiefungen (23.1, 24.1) zusammenwirken, die im Kodierrad und der Gestellwand angeordnet sind, um das Ringsegment selektiv mit dem Kodierrad und der Gestellwand drehfest zu verbinden.

11. Vorrichtung nach Anspruch 10, wobei die Vertiefungen (23.1, 24.1) Rampen umfassen, die Übergangszonen in der Nähe der Ruheposition derart begrenzen, dass, wenn sich ein Hebel (4, 5) in der Übergangszone befindet, eine Verstellung des anderen Hebels in seine Position der maximalen Betätigung die Rückstellung des ersten Hebels in seine Ruheposition bewirkt.

12. Vorrichtung nach Anspruch 10, umfassend zwei Arretierstifte (22.1, 22.2), die einerseits eine Verriegelungsfunktion und andererseits eine Rückstellfunktion in die Ruheposition in der Übergangszone zusammen mit den entsprechenden Vertiefungen gewährleisten.

13. Vorrichtung nach Anspruch 1, umfassend Mittel zur Definition von Kraft und/oder Bewegungsregeln, die zur automatischen Rückstellung von mindestens einem der Hebel (4, 5) in seine Ruheposition überwacht werden.

14. Vorrichtung nach Anspruch 13, wobei die genannten Mittel zur Definition Reliefprofile umfassen.

15. Vorrichtung nach Anspruch 1, wobei der Haupthebel (4) zwei Flansche umfasst, zwischen denen der Hilfshebel (5) und die Verbindungsstange (6) angeordnet sind.

16. Vorrichtung nach Anspruch 1, wobei die Anordnung aus Kodierrad (2) und Hebeln (4, 5) mit Reibungsmitteln verbunden ist, die im Bereich der Achse oder des Außenumfangs des Kodierrads wirken.

17. Vorrichtung nach Anspruch 1, wobei das Verbindungsorgan (7) elastisch gegen eine Wand vorgespannt ist, die fest mit dem Kodierrad (2) verbunden und mit einem Profil (10) versehen ist.

18. Vorrichtung nach Anspruch 1, wobei das Verbindungsorgan mit mindestens einer Rolle (12, 13) versehen ist, die drehbar um eine Achse gelagert ist, die parallel zur Rotationsachse des Kodierrads ist.

## Claims

1. An aeroengine control device comprising both a mount (1), having pivotally mounted thereon a code wheel (2) together with a main lever (4) and a secondary lever (5), both for turning the code wheel, each lever being movable between a rest position and a maximum actuation position, the secondary lever being mounted to pivot on the main lever, a connecting rod (6) connecting the secondary lever to the code wheel in permanent manner, the device being **characterized in that** the main lever is provided with a connection member (7) arranged to co-operate with a portion in relief (10) secured to the code wheel and a portion in relief (11) secured to the mount in such a manner that the connection member attaches to the code wheel when the main lever is moved while the secondary lever is in the rest position and attaches to the mount while releasing rotation of the code wheel when the secondary lever is moved while the main lever is in the rest position, with movement of either lever being prevented when the other lever is away from its rest position.

2. A device according to claim 1, wherein the connection member (7) comprises an arm having one end hinged to the main lever (4) and a free end arranged to co-operate with the portions in relief (10, 11).

3. A device according to claim 1 or claim 2, wherein the connection member (7) is received between two walls (8, 9) that extend in circular arcs about the axis of the code wheel (2), one of them being secured to the code wheel and the other to the mount (1), the walls being spaced apart from each other and each including a notch (10, 11) for receiving a portion of the connection member in such a manner that turning of the code wheel relative to the mount is possible only when the connection member is received in one or other of the notches, the notches facing each other when the code wheel is in its position that is common to both of the levers being in their rest positions.

4. A device according to claim 3, wherein the connection member (7) is urged resiliently against the wall (8) secured to the code wheel (2).

5. A device according to claim 3, wherein the connection member (7) is provided with at least one wheel (12, 13) mounted to rotate about an axis parallel to the axis of rotation of the code wheel (2).

6. A device according to claim 5, wherein the connection member (7) is provided with two wheels (12, 13) mounted to pivot about respective axes parallel to the axis of rotation of the code wheel (2) and in alignment in a direction that is substantially radial relative to the code wheel.

7. A device according to claim 6, wherein the wheels (12, 13) are movable relative to each other parallel to the substantially radial direction and are urged resiliently towards a position in which they are spaced apart from each other.

8. A device according to claim 1, wherein the connection member (7) includes at least one element that is movable in translation in a direction that is substantially radial relative to the code wheel (2).

9. A device according to claim 1, wherein the main lever (4) is mounted to pivot about the axis of the code wheel (2).

10. A device according to claim 1, wherein the connection member comprises at least a ring segment (20) surrounding the code wheel (2) and being received between a peripheral surface of the code wheel and a wall (21) of the mount surrounding the ring segment, the ring segment slidably receiving at least one pin (22.1, 22.2) having ends arranged to co-operate with notches (23.1, 24.1) formed in the code wheel and with the wall of the mount in order to secure the ring segment in rotation selectively with the code wheel or with the wall of the mount.

11. A device according to claim 10, wherein the notches (23.1, 24.1) include ramps defining transition zones in the vicinity of the rest position such that when a first one of the levers (4, 5) is in the transition zone, movement of the other lever towards its maximum actuation position causes the first lever to return to its rest position.

12. A device according to claim 10, having two pins (22.1, 22.2), one performing a locking function and the other performing a function of returning to the rest position when in the transition zone in co-operation with the corresponding notches.

13. A device according to claim 1, including definition means for defining controlled force relationships and/or movement relationships for automatically returning at least one of the levers (4, 5) to its rest position.

14. A device according to claim 13, wherein said definition means comprise profiles of the portions in relief.

15. A device according to claim 1, wherein the main lever (4) has two plates with the secondary lever (5) and the connecting rod (6) being mounted between them.

16. A device according to claim 1, wherein the assembly comprising the code wheel (2) and the levers (4, 5) is associated with friction means acting in the vicinity of the axis or in the vicinity of the outer periphery of the code wheel.

17. A device according to claim 1, wherein the connection member (7) is urged resiliently against a wall secured to the code wheel (2) and provided with the portion in relief (10).

18. A device according to claim 1, wherein the connection member is provided with at least one wheel (12, 13) mounted to rotate about an axis parallel to the axis of rotation of the code wheel.
